# EUROPÄISCHE PATENTANMELDUNG

(11) **EP 3 428 213 A1**
(43) Veröffentlichungstag der Anmeldung: **16.01.2019**
(21) Anmeldenummer: 17180886.8
(22) Anmeldetag: 12.07.2017
(51) Int. Cl.: C08G 18/79, C08G 18/24, C08G 18/28, C07F 7/22

(54) **ANORGANISCHE ZINNVERBINDUNGEN UND IHRE VERWENDUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft anorganische Zinnverbindungen gemäß der Formel I, 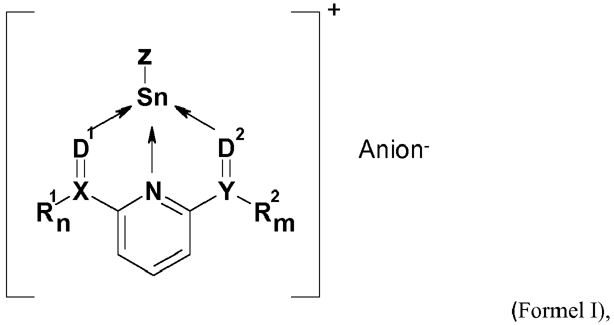 in welcher
R¹ und R²
unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
n
in Abhängigkeit von X für die Zahl 1 oder 2 steht,
m
in Abhängigkeit von Y für die Zahl 1 oder 2 steht,
Z
für Halogenid, Carboxylat, Alkoholat oder Sulfonat steht,
X und Y
unabhängig voneinander für gleiche oder verschiedene Atome ausgewählt aus der Gruppe bestehend aus den Atomen C, P und S stehen,
D¹ und D²
unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht und wobei R³ kein Phenylrest ist, der an 2,6-Position durch von H verschiedene organische Reste substituiert ist, und
Anion⁻
für SnZ₃⁻ oder Z⁻ steht.

Weiterhin betrifft die Erfindung auch die Verwendung anorganischer Zinnverbindungen, insbesondere als Katalysatoren für die Reaktion von Isocyanatgruppen mit gegenüber Isocyanatgruppen reaktiven Gruppen.

## Beschreibung

Die Erfindung betrifft neue anorganische Zinnverbindungen, ein Verfahren zu deren Herstellung und deren Verwendung, insbesondere als Katalysatoren für die Reaktion von Isocyanatgruppen mit gegenüber Isocyanatgruppen reaktiven Gruppen. Weitere Gegenstände sind eine Zusammensetzung enthaltend anorganische Zinnverbindungen und in Anwesenheit dieser anorganischen Zinnverbindungen erhältliche Polyisocyanat-Polyadditionsprodukte.

Polyurethanbeschichtungen sind seit langem bekannt und werden in vielen Bereichen eingesetzt. Sie werden in der Regel aus einer Polyisocyanat- und einer Hydroxylkomponente durch Vermischen unmittelbar vor der Applikation hergestellt (Zwei-Komponenten-Technologie oder auch 2K-Technologie). Für lichtechte Beschichtungen werden in der Regel Polyisocyanatkomponenten auf Basis aliphatischer Polyisocyanate eingesetzt, die im Vergleich zu Produkten mit aromatisch gebundenen Isocyanatgruppen deutlich langsamer mit der Hydroxylkomponente in Reaktion treten. In den meisten Fällen muss daher die Reaktion katalysiert werden. Zusätzlich wird, wo das möglich ist, zur weiteren Beschleunigung der Reaktion erwärmt. Als Katalysator haben sich dabei organische Zinnverbindungen, insbes. Dibutylzinndilaurat (DBTL) bewährt. Diese haben den generellen Nachteil eines ungünstigen ökologischen Profils, was u.a. bereits dazu geführt hat, die Stoffklasse der Organozinnverbindungen aus Schiffsanstrichstoffen, denen sie als Biozid beigemengt wurden, vollständig zu verbannen.

Ein genereller Nachteil der 2K-Technologie ist es, dass die NCO-OH-Reaktion bereits bei Zimmertemperatur langsam, katalysiert deutlich schneller abläuft, was dazu führt, dass für die Verarbeitung der fertig formulierten Mischung eines derartigen 2K-Systems nur ein zeitlich enges Verarbeitungsfenster zur Verfügung steht (Topfzeit), welches durch die Anwesenheit des Katalysators weiter verkürzt wird.

Es hat deshalb nicht an Versuchen gefehlt, Katalysatoren zu entwickeln, die die Vernetzungsreaktion bei der Bereitung der 2K-Mischung kaum, nach Applikation aber deutlich beschleunigen (latente Katalysatoren) und die nicht auf Organozinnverbindungen basieren. Organozinnverbindungen sind dabei alle Verbindungen, die mindestens eine Sn-C-Bindung aufweisen.

Beispiele für derartige Katalysatoren, ihre Herstellung und katalysierte Polyurethansysteme sind beispielsweise den WO 2011/051247 A1, WO 2014/048879 A1, WO 2014/048854 A1, WO 2014/131750 A1, EP 2 990 381 A1 zu entnehmen.

Ein genereller Nachteil dieser Verbindungen und Systeme ist es, das bei der Synthese der anorganischen Zinnverbindungen der o.g. Art entweder sehr lange Reaktionszeiten, hochsiedende Lösemittel oder Zinn-IV-halogenide, insbesondere Zinntetrachlorid, zum Einsatz kommen und das aus der Reaktion des Zinn-IV-halogenides resultierende, Halogen-haltige Nebenprodukt abgetrennt werden muss.

Günstiger wären Verbindungen bzw. Zusammensetzungen, die diese Nachteile nicht aufweisen und beispielsweise die katalytisch aktive Spezies "in situ", d.h. beim Zusammengeben der beiden Komponenten des 2K-Reaktivsystemes, bilden können.

Die Aufgabe der vorliegenden Erfindung wurde durch die Bereitstellung der erfindungsgemäßen anorganischen Zinnverbindungen gemäß der Formel I, der erfindungsgemäßen Verwendung, der erfindungsgemäßen Zusammensetzung oder der erfindungsgemäßen Polyisocyanat-Polyadditionsprodukte gelöst.

Ein erster Gegenstand der Erfindung ist daher eine anorganische Zinnverbindung gemäß der Formel I, 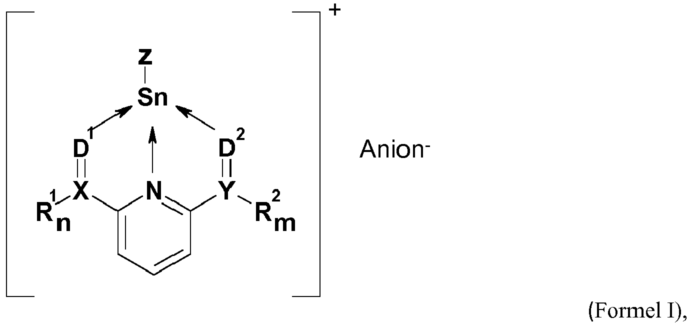 in welcher
- R¹ und R²: unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
- n: in Abhängigkeit von X für die Zahl 1 oder 2 steht,
- m: in Abhängigkeit von Y für die Zahl 1 oder 2 steht,
- Z: für Halogenid, Carboxylat, Alkoholat oder Sulfonat steht,
- X und Y: unabhängig voneinander für gleiche oder verschiedene Atome ausgewählt aus der Gruppe bestehend aus den Atomen C, P und S stehen,
- D¹ und D²: unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht und wobei R³ kein Phenylrest ist, der an 2,6-Position durch von H verschiedene organische Reste substituiert ist, und
- Anion⁻: für SnZ₃⁻ oder Z⁻ steht.

Bevorzugt bedeuten erfindungsgemäß die Ausdrücke "umfassend" oder "enthaltend", "im Wesentlichen bestehend aus" und besonders bevorzugt "bestehend aus".

Vorliegend werden die Begriffe Alkoholat und Alkoxid synonym füreinander verwendet.

Vorliegend sind als mögliche Substituenten der von H verschiedenen Reste R¹ und R² =O, -OR, =N-R, -NR₂, =S, -SR und/oder -SiR₃, wobei die Reste R beliebig gewählt werden können, bevorzugt.

Vorliegend sind als mögliche unterbrechende Heteroatome der von H verschiedenen Reste R¹ und R² -O-, >NR, -S- und/oder -Si(R₂)-, wobei die Reste R beliebig gewählt werden können, bevorzugt.

Vorliegend wird unter dem Begriff "n in Abhängigkeit von X" verstanden, dass n für X gleich C die Zahl 1 ist, für X gleich P die Zahl 2 ist und für X gleich S die Zahl 1 ist.

Vorliegend wird unter dem Begriff "m in Abhängigkeit von Y" verstanden, dass m für Y gleich C die Zahl 1 ist, für Y gleich P die Zahl 2 ist und für Y gleich S die Zahl 1 ist.

In einer ersten bevorzugten Ausführungsform stehen R¹ und R² unabhängig voneinander für gleiche oder verschiedene Reste ausgewählt aus der Gruppe bestehend aus H, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, bevorzugt unabhängig voneinander für gleiche oder verschiedene Reste ausgewählt aus der Gruppe bestehend aus O-C₁-C₈-Alkyl, O-C₁-C₂₀-Aralkyl, O-C₆-C₁₂-Aryl, N(C₁-C₈-Alkyl)₂, N(C₁-C₂₀-Aralkyl)₂ und N(C₆-C₁₂-Aryl)₂ stehen, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind.

In einer weiteren bevorzugten Ausführungsform stehen D¹ und D² unabhängig voneinander für gleiche oder verschiedene Reste ausgewählt aus der Gruppe bestehend aus O und S.

In einer weiteren bevorzugten Ausführungsform steht Z für Halogenid oder Sulfonat, bevorzugt für Chlorid sowie Perfluoralkylsulfonat ausgewählt aus der Gruppe bestehend aus CF₃SO₃ bis C₈F₁₇SO₃.

Verbindungen gemäß der Formel I sind überraschenderweise durch einfache Reaktion der Verbindungen gemäß der Formel II, 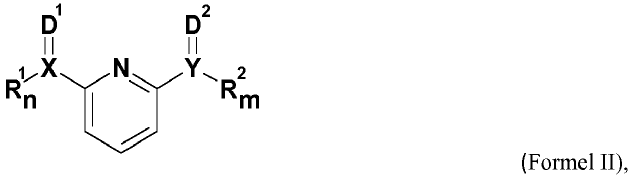 in der R¹, R², n, m, X, Y, D¹ und D² die bei Formel I aufgeführte Bedeutung haben, mit Zinn-II-salzen der Formel SnZ₂ zugänglich, wobei Z auch die bei Formel I aufgeführte Bedeutung hat.

Das Prinzip der Autoionisation durch Reaktion geeignet substituierter Donorliganden mit zweiwertigen Verbindungen des Zinns oder Germaniums ist bekannt (J. Amer. Chem. Soc. 2012, 134, 4998-5003 und darin zitierte Literatur). Allerdings legen die bekannten Veröffentlichungen die Vermutung nahe, dass es zur Stabilisierung derartiger Verbindungen sterisch anspruchsvoller Substituenten an den Donoratomen D¹ und/oder D² in Formel I bedarf, z. B. des in J. Amer. Chem. Soc. 2012, 134, 4998-5003 beschriebenen 2,6-Diisopropylphenyl-Substituenten.

Die bekannten Verbindungen des Standes der Technik sind nur sehr aufwändig herstellbar und für einen breiten Einsatz in der industriellen Praxis zu teuer. Die Option, das Prinzip der Autoionisation für die Bereitstellung, ggf. thermolatenter, 2K-Polyurethansysteme zu nutzen, ist bisher völlig unbekannt.

Die erfindungsgemäßen Zinn-II-salze weisen diese Nachteile nicht auf und sind beispielsweise durch einfaches Zusammengeben (in einem geeigneten Lösemittel) oder vorgelöst in den beiden Reaktivkomponenten der erfindungsgemäßen Zusammensetzung bzw. des erfindungsgemäßen 2K-Polyurethan-Reaktivsystems von zwei Äquivalenten Zinn-II-chlorid mit einem Äquivalent eines Derivates (Ester, Amid) der wohlfeilen 2,6-Dipicolinsäure erhältlich. Unter den beiden Reaktivkomponenten wird vorliegend als erste Komponente, eine Komponente A) verstanden, die mindestens eine Isocyanatgruppen aufweisende Verbindung umfasst und als zweite Komponente, eine Komponente B) verstanden, die mindestens eine NCO-reaktive Verbindung umfasst. Geeignete und bevorzugte Verbindungen für diese Komponenten sind im weiteren Verlauf der Beschreibung genannt.

Ein weiterer Gegenstand der vorliegenden Erfindung ist ein Verfahren zur Herstellung einer erfindungsgemäßen, anorganischen Zinnverbindung gemäß der Formel I, umfassend die Umsetzung mindestens einer Verbindung gemäß der Formel II, 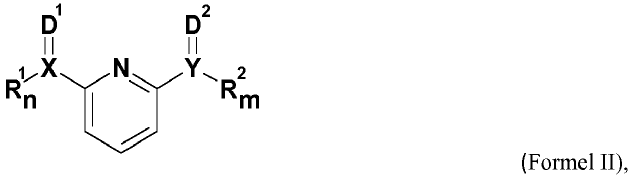 in welcher R¹, R², n, m, X, Y, D¹ und D² die vorstehend für Formel I aufgeführte Bedeutung haben, mit mindestens einem Zinn-II-salz der Formel SnZ₂, wobei Z die vorstehend für Formel I aufgeführte Bedeutung hat. Die in den jeweils bevorzugten Ausführungsformen der erfindungsgemäßen anorganischen Zinnverbindungen angegebenen Definitionen für R¹, R², n, m, X, Y, D¹, D² und Z sind auch für die Formel II bzw. für die Zinn-II-salzen der Formel SnZ₂ als bevorzugte Varianten und stellen somit weitere bevorzugte Ausführungsformen des erfindungsgemäßen Verfahrens dar.

Überraschenderweise eignen sich die so erhaltenen, erfindungsgemäßen, anorganischen Zinnverbindungen unter anderem hervorragend als Katalysatoren für die Polyurethanherstellung. Somit ist die Verwendung wenigstens einer erfindungsgemäßen, anorganischen Zinnverbindung gemäß der Formel I oder wenigstens einer anorganischen Zinnverbindung gemäß der Formel III, 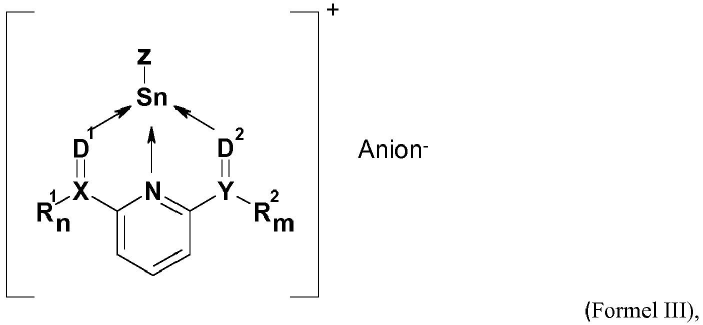 in welcher
- R¹ und R²: unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
- n: in Abhängigkeit von X für die Zahl 1 oder 2 steht,
- m: in Abhängigkeit von Y für die Zahl 1 oder 2 steht,
- Z: für Halogenid, Carboxylat, Alkoholat oder Sulfonat steht,
- X und Y: unabhängig voneinander für gleiche oder verschiedene Atome ausgewählt aus der Gruppe bestehend aus den Atomen C, P und S stehen,
- D¹ und D²: unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht, und
- Anion⁻: für SnZ₃⁻ oder Z⁻ steht als Katalysator der Reaktion von Isocyanatgruppen mit gegenüber Isocyanatgruppen reaktiven Gruppen ein weiterer Gegenstand der Erfindung.

Die gegenüber Isocyanatgruppen reaktiven Gruppen werden im Folgenden auch als NCO-reaktive Gruppen bezeichnet.

Generell kann die eingesetzte Menge der Katalysatoren über einen breiten Bereich frei gewählt werden. Darüber hinaus weisen sie bei geeigneter Dosierung den Effekt der Thermolatenz auf. Unter Thermolatenz versteht man hierbei, dass die zu katalysierende Reaktion trotz Gegenwart des Katalysators erst bei Erreichen bzw. Überschreiten einer bestimmten Temperatur schneller abläuft und sich das Reaktionssystem unterhalb dieser "Schalttemperatur" nahezu so verhält, als wäre kein Katalysator zugegen. Diese vorstehend genannte, geeignete Dosierung kann vom Fachmann in einfachen Vorversuchen bestimmt werden und kann sich je nach gewählter anorganischer Zinnverbindung und Polyurethanrezeptur geringfügig variieren. Falls gewünscht, kann der Effekt der Thermolatenz auch durch eine höhere Katalysatorkonzentration unterdrückt werden.

Die Synthese der entsprechenden Katalysatoren entsprechend Formel I ist sehr einfach und erfolgt beispielsweise *i)* durch Zugabe der Liganden zu einer Suspension von SnZ₂ in einem geeigneten Lösemittel oder *ii)* vorgelöst in den beiden Komponenten des 2K-Polyurethan-Reaktivsystems. Aus den nach Verfahrensweise *i)* erhaltenen Lösungen fallen die entsprechenden Reaktionsprodukte nach Aufbewahrung bei 0 bis 20 °C als kristalline Feststoffe aus, wird gemäß *ii)* verfahren, erfolgt keine Separierung des Katalysators ("in situ" Arbeitsweise, s. z.B. Bsp. 11). Die als Liganden verwendeten Pyridin-Derivate sind entweder kommerziell erhältlich bzw. entsprechend verschiedener Literaturvorschriften (Y. Belabassi, S. Alzghari, J.-L. Montchamp, J. Organomet. Chem. 2008, 693, 3171. B. R. Kim, H.-G. Lee, S.-B. Kang, G. H. Sung, J.-J. Kim, J. K. Park, S.-G. Lee, Y.-J. Yoon, Synthesis 2012, 44, 42-50) in guten bis exzellenten Ausbeuten zugänglich. Anorganische Zinnverbindungen gemäß der Formel III lassen sich beispielsweise auf dem gleichen Wege erhalten.

Daher ist ein weiterer Gegenstand der Erfindung eine Zusammensetzung, enthaltend
- mindestens ein aliphatisches, cycloaliphatisches, araliphatisches und/oder aromatisches Polyisocyanat,
- mindestens eine NCO-reaktive Verbindung, und
- mindestens eine erfindungsgemäße, anorganische Zinnverbindung gemäß der Formel I oder mindestens eine anorganische Zinnverbindung gemäß der Formel III, 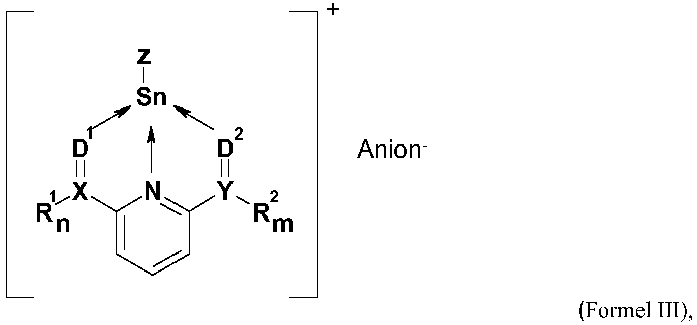 in welcher
   - R¹ und R²: unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
   - n: in Abhängigkeit von X für die Zahl 1 oder 2 steht,
   - m: in Abhängigkeit von Y für die Zahl 1 oder 2 steht,
   - Z: für Halogenid, Carboxylat, Alkoholat oder Sulfonat steht,
   - X und Y: unabhängig voneinander für gleiche oder verschiedene Atome ausgewählt aus der Gruppe bestehend aus den Atomen C, P und S stehen,
   - D¹ und D²: unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht, und
   - Anion⁻: für SnZ₃⁻ oder Z⁻ steht.

In einer bevorzugten Ausführungsform der erfindungsgemäßen Zusammensetzung liegt die Zusammensetzung in Form eines Zwei-Komponenten-Systems vor, welches eine Komponente A) enthält, die wenigstens das mindestens eine aliphatische, cycloaliphatische, araliphatische und/oder aromatische Polyisocyanat umfasst und eine Komponente B) enthält, die wenigstens die mindestens eine NCO-reaktive Verbindung umfasst, wobei die mindestens eine anorganische Zinnverbindung gemäß der Formel I oder die mindestens eine anorganische Zinnverbindung gemäß der Formel III in der Komponente A) und/oder der Komponente B) enthalten ist.

Alternativ oder in Ergänzung, bevorzugt alternativ zur direkten Zugabe der mindestens einen anorganischen Zinnverbindung gemäß der Formel I oder der mindestens einen anorganischen Zinnverbindung gemäß der Formel III zur erfindungsgemäßen Zusammensetzung bzw. des Zwei-Komponenten-Systems können die Verbindungen der Formel I oder III auch "in situ" gebildet werden. Besonders bevorzugt ist hierbei, dass die Komponente A) eine der beiden für die "in situ" Katalysatorsynthese nötigen Komponenten, bevorzugt das Zinn-freie Derivat gemäß der Formel II, enthält und die Komponente B) die entsprechend andere für die "in situ" Katalysatorsynthese nötige Komponente, bevorzugt das Zinn-Derivat SnZ₂, enthält.

Die vorstehenden Zwei-Komponenten-Systeme sind daher ebenfalls Gegenstand der vorliegenden Erfindung.

Ein weiterer Gegenstand der Erfindung sind Polyisocyanat-Polyadditionsprodukte erhältlich oder erhalten aus der erfindungsgemäßen Zusammensetzung oder aus
a) mindestens einem aliphatischen, cycloaliphatischen, araliphatischen und/oder aromatischen Polyisocyanat,
b) mindestens einer NCO-reaktiven Verbindung,
c) mindestens einer erfindungsgemäßen, anorganischen Zinnverbindung gemäß der Formel I oder mindestens einer anorganischen Zinnverbindung gemäß der Formel III, 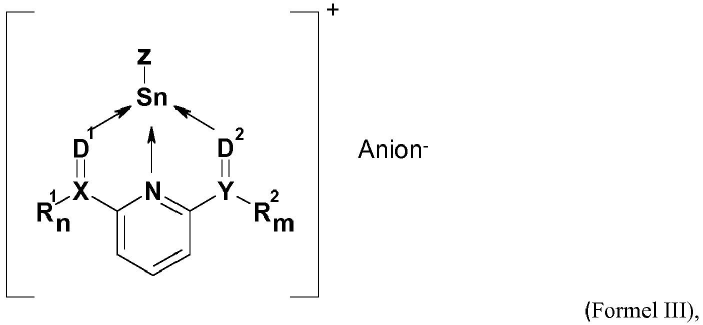 in welcher
   - R¹ und R²: unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
   - n: in Abhängigkeit von X für die Zahl 1 oder 2 steht,
   - m: in Abhängigkeit von Y für die Zahl 1 oder 2 steht,
   - Z: für Halogenid, Carboxylat, Alkoholat oder Sulfonat steht,
   - X und Y: unabhängig voneinander für gleiche oder verschiedene Atome ausgewählt aus der Gruppe bestehend aus den Atomen C, P und S stehen,
   - D¹ und D²: unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht, und
   - Anion⁻: für SnZ₃⁻ oder Z⁻ steht,
   wobei die anorganische Zinnverbindung gemäß der Formel I oder gemäß der Formel III vor oder während der Mischung des Polyisocyanats a) und der NCO-reaktiven Verbindung b) gebildet werden kann,
d) gegebenenfalls weiteren von c) verschiedenen Katalysatoren und/oder Aktivatoren und
e) gegebenenfalls Füllstoffen, Pigmenten, Additiven, Verdickern, Entschäumern und/oder anderen Hilfs- und Zusatzstoffen.

Die bei der erfindungsgemäßen Verwendung, der erfindungsgemäßen Zusammensetzung und den erfindungsgemäßen Polyisocyanat-Polyadditionsprodukten in einer alternativen Ausführungsform zum Einsatz kommenden anorganische Zinnverbindung gemäß der Formel III unterscheidet sich im Wesentlichen, bevorzugt nur dadurch von der anorganischen Zinnverbindung gemäß der Formel I, dass die Maßgabe, dass R³ kein Phenylrest ist, der an 2,6-Position durch von H verschiedene organische Reste substituiert ist, entfällt. Anorganische Zinnverbindungen gemäß der Formel III sind bei diesen Gegenständen bevorzugt.

In weiteren, bevorzugten Ausführungsformen der erfindungsgemäßen Verwendung, der erfindungsgemäßen Zusammensetzung und den erfindungsgemäßen Polyisocyanat-Polyadditionsprodukten stellen die jeweils bevorzugten Ausführungsformen der erfindungsgemäßen anorganischen Zinnverbindungen gemäß der in Formel I angegebenen Definitionen für R¹, R², n, X, Y, D¹, D² und Z unabhängig voneinander weitere Ausgestaltungen der vorliegenden Erfindung, besonders auch der anorganischen Zinnverbindungen gemäß der Formel III dar.

Die für die Herstellung von Polyisocyanat-Polyadditionsprodukten, insbesondere Polyurethanen, geeigneten Polyisocyanate sind die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon. Die nachstehend aufgeführten Verbindungen sind ebenfalls als NCO-reaktive Verbindungen in der erfindungsgemäßen Zusammensetzung geeignet. Beispiele für derartige Polyisocyanate sind Di- oder Triisocyanate, wie z.B. Butandüsocyanat, Pentandüsocyanat (Pentamethylendiisocyanat, PDI), Hexandiisocyanat (Hexamethylendiisocyanat, HDI), 4-Isocyanatomethyl-1,8-octandiisocyanat (Triisocyanatononan, TIN), Bis(isocyanatomethyl)norbornan (NBDI), 4,4'-Methylenbis(cyclohexylisocyanat) (H₁₂MDI), 3,5,5-Trimethyl-1-isocyanato-3-isocyanatomethylcyclohexan (Isophorondiisocyanat, IPDI), 1,3-sowie 1,4-Bis(isocyanatomethyl)cyclohexan (H₆XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktuereinheiten. Bevorzugt werden Polyisocyanate auf Basis aliphatischer und cycloaliphatischer Diisocyanate eingesetzt.

Die Polyisocyanatkomponente kann in einem geeigneten Lösemittel vorliegen und optional eine der beiden für die "in situ" Katalysatorsynthese nötigen Komponenten, bevorzugt das Zinn-freie Derivat gemäß der Formel II, enthalten. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Polyisocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitronensäureester), Stabilisatoren (zum Beispiel Brønsted- und Lewis-Säuren, wie beispielsweise Salzsäure, Benzoylchlorid, Phosphonsäuren sowie deren saure Ester, Phosphansäuren sowie deren saure Ester und Phosphinsäuren, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkylmorpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyharnstoff einbaufähige Farbstoffe (die also über Zerewitinoff-aktive Wasserstoffatome verfügen) und/oder Farbpigmente enthalten.

Als NCO-reaktive Verbindungen können alle dem Fachmann bekannten Verbindungen eingesetzt werden, welche eine mittlere OH-, SH- bzw. NH-Funktionalität von mindestens 1,5 aufweisen. Die nachstehend aufgeführten Verbindungen sind ebenfalls als NCO-reaktive Verbindungen in der erfindungsgemäßen Zusammensetzung geeignet. In beiden Fällen kann die "NCO-reaktive Komponente" optional eine der beiden für die "in situ" Katalysatorsynthese nötigen Komponenten, bevorzugt das Zinn-Derivat SnZ₂, enthalten. Geeignete NCO-reaktive Verbindungen sind beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, weiterhin niedermolekulare Di-, Tri- oder Polythiole wie z.B. 1,2-Ethandithiol, 1,1-Propandithiol, 1 ,2-Propandithiol, 1,3-Propandithiol, 2,2-Propandithiol, 1 ,4-Butandithiol, 2,3- Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol und 2-Methylcyclohexan-2,3-dithiol, Etherthiole, wie z. B. 2-Methoxyethanthiol, 2-Ethoxyethanthiol, 2-Butoxyethanthiol, 2-(3-Methylbutoxy)ethanthiol, 2-(2-Methoxyethoxy)ethanethiol, Bis(2-mercaptoethyl)ether, 2,5,8,11-Tetraoxatridecane-13-thiol, 2,5,8,11,14-pentaoxahexadecane-16-thiol, 2,5,8,11,14,17-hexaoxanonadecane-19-thiol und/oder 2,5,8,11,14,17,20-heptaoxadocosane-22-thiol, Thioethergruppen enthaltende Polythiole, wie z. B. 2,4-Dimercapto-methyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimercapto-3,6,9-trithiaundecan, 5,7-Dimercaptomethyl-1,11-dimercapto-3,6,9-trithiaundecan, 5,6-Bis-(mercaptoethylthio)-1,10-dimercapto-3,8-dithiadecan, 4,5-Bis-(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithia-hexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)sulfid, Bis(mercaptoethyl)disulfid, Bis(mercaptopropyl)sulfid, Bis(mercaptopropyl)disulfid, Bis(mercaptomethylthio)methan, Tris(mercaptomethylthio)methan, Bis(mercaptoethylthio)methan, Tris(mercaptoethylthio)methan, Bis(mercaptopropylthio)methan, 1,2-Bis(mercaptomethylthio)ethan, 1,2-Bis-(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercaptoethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian und 2-(3-Bis(mercaptomethyl)-2-thiapropyl)-1,3-dithiolan, Polyesterthiole, wie z. B. Ethyl-2-mercaptoacetat, Propyl-2-mercaptoacetat, Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercapto-acetat), 3-Mercapto-1,2-propandiol-bis(3-mercaptopropionat), Trimethylolpropan-tris(2-mercapto-acetat), Trimethylolpropan-tris(3 - mercaptopropionat), Trimethylolethan-tris(2-mercaptoacetat), Tri-methylol-ethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxymethylsulfid-bis(2-mercaptoacetat), Hydroxymethylsulfid-bis(3-mercaptopropionat), Hydroxyethyl-sulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat, Bis(2-mercaptoethylester)thiodipropionat und Tris[2-(3-mercaptopropionyloxy)ethyl]isocyanurate, aromatische Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)benzol, 1,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalinithiol, 1,2,3,4-Tetramercaptobenzol, 1,2,3,5-Tetraercapto-benzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrais(mercaptoethyl)benzol, 1,2,3,5-Tetrakis(mercaptoethyl)benzol, 1,2,4,5-Tetrakis(mercaptoethyl)benzol, 2,2'-Dimercaptobiphenyl und 4,4'-Dimercaptobiphenyl sowie Hydroxythiole, wie z. B. 2-Mercaptoethanol, 3-Mercapto-1-propanol, 2-Mercapto-1-propanol, 1-Mercapto-2-propanol, 4-Mercapto-1-butanol, 1-Mercaptobutan-2-ol, 6-Mercapto-1-Hexanol, 8-Mercapto-1-octanol, 9-Mercapto-1-nonanol, 11-Mercapto-1-undecanol, 1-Mercaptododecan-2-ol, 16-Mercapto-1-hexadecanol, 1-Mercaptohexadecan-2-ol, 1,3-Dimercapto-2-propanol, 2,3-Dimercaptopropanol, Dithioerythritol, 2-Mercaptoethoxyethanol und 2-Hydroxyethylmercaptoacetat, außerdem kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole. Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können. Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethyl cyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden. Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid. Bevorzugt handelt es sich bei den NCO-reaktiven Verbindungen um die höhermolekularen Polyhydroxyverbindungen.

Die NCO-reaktive Komponente kann in einem geeigneten Lösemittel vorliegen. Geeignete Lösemittel sind solche, die eine ausreichende Löslichkeit der Komponente aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA). Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Das Verfahren zur Herstellung der Polyisocyanat-Polyadditionsprodukte kann in Gegenwart üblicher Rheologieverbesserer, Stabilisatoren, UV-Schutzmittel, Katalyatoren, Hydrolyseschutzmittel, Emulgatoren, Füllstoffe, gegebenenfalls einbaufähiger Farbstoffe (die also über Zerewitinoff-aktive Wasserstoffatome verfügen) und/oder Farbpigmente durchgeführt werden. Möglich ist auch eine Zugabe von Zeolithen.

Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat-Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

Die erfindungsgemäßen Systeme können in Lösung oder aus der Schmelze sowie bei Pulverlacken in fester Form mit Methoden wie Streichen, Rollen, Gießen, Spritzen, Tauchen, Wirbelschichtverfahren oder durch elektrostatische Sprühverfahren auf dem zu beschichtenden Gegenstand appliziert werden. Als Substrate eigenen sich beispielsweise Werkstoffe wie Metalle, Holz, Kunststoffe oder Keramiken.

Ein weiterer Gegenstand der Erfindung sind daher Beschichtungsmittel enthaltend die erfindungsgemäßen Polyisocyanat-Polyadditionsprodukte, ebenso wie die daraus erhältlichen Beschichtungen und die mit diesen Beschichtungen beschichteten Substrate.

Die Erfindung wird anhand der nachfolgenden Beispiele näher erläutert, ohne sie jedoch auf diese einzuschränken.

### Beispiele

In den Beispielen sind alle Prozentangaben, soweit nicht anders vermerkt, als Gewichtsprozent zu verstehen.

Alle Reaktionen wurden unter einer trockenen Stickstoffatmosphäre durchgeführt.

Die Katalysatoren 1 - 3 wurden in praktisch quantitativer Ausbeute durch einfaches Zusammengeben eines Äquivalentes an 2,6-disubstituiertem Pyridinderivat der Formel II (soweit nicht kommerziell zugänglich, Synthese s. Y. Belabassi, S. Alzghari, J.-L. Montchamp, J. Organomet. Chem. 2008, 693, 3171. bzw. B. R. Kim, H.-G. Lee, S.-B. Kang, G. H. Sung, J.-J. Kim, J. K. Park, S.-G. Lee, Y.-J. Yoon, Synthesis 2012, 44, 42-50 und darin zitierte Literatur) mit zwei Äquivalenten wasserfreien Zinn-II-chlorids (Produkt der Fa. Aldrich, Taufkirchen, D) bei Zimmertemperatur und mehrstündigem Rühren in Toluol (Kat. 1, Pyridinderivat der Formel II mit R¹ = R² = OⁱPr, n = 2, X = Y = P, D¹ = D² = O), Acetonitril (Kat.2, Pyridinderivat der Formel II mit R¹ = R² = OCH₃, n = 1, X = Y = C, D¹ = D² = O) bzw. Methanol (Kat.3, Pyridinderivat der Formel II mit R¹ = R² = N(C₂H₅)₂, n = 1, X = Y = C, D¹ = D² = O) sowie anschließender Entfernung des Lösemittels im Vakuum als farblose bis gelbe Pulver gewonnen.

Dibutylzinndilaurat (DBTL) wurde von der Fa. TIB Chemicals, Mannheim, D, bezogen.

Die Katalysatormenge wurde zur besseren Vergleichbarkeit der Aktivität der erfindungsgemäß einzusetzenden Katalysatoren und der Katalysatoren aus den Vergleichsbeispielen als mg Sn je kg Polyisocyanathärter (lösemittelfrei) (ppm) angegeben, wobei als Polyisocyanathärter das Handelsprodukt Desmodur^{®} N 3300 der Fa. Covestro Deutschland AG, Leverkusen, D, und als Modellverbindung für die Isocyanat-reaktive Komponente (,Poly'ol) ein Äquivalent Triethylenglykolmonomethylether (bezogen auf die freien Isocyanatgruppen des Polyisocyanathärters, Produkt der Fa. Aldrich, Taufkirchen, D) im NCO:OH Verhältnis von 1:1 eingesetzt wurden.

Bei der Berechnung des Katalysatorgehaltes in den erfindungsgemäßen Beispielen wurde immer auf das "kationische" Zinnatom abgestellt, d.h. sofern im Anion Zinn enthalten ist, wird es für diese Berechnung nicht berücksichtigt. Durch Zugabe von 10% n-Butylacetat (bezogen auf Desmodur^{®} N 3300) wurde sichergestellt, über den gesamten Reaktionsverlauf hinreichend niedrigviskose Proben ziehen zu können, die eine genaue Erfassung des NCO-Gehaltes mittels Titration gemäß DIN EN ISO 11909:2007-05 gestatten. Der zu Beginn der Reaktion ohne jedwede NCO-OH-Reaktion berechnete und auch titrimetrisch gefundene NCO-Gehalt wird zur besseren Vergleichbarkeit aller Versuche untereinander auf 100% normiert.

Vergleichsversuch 1 zeigt die Abnahme des NCO-Gehaltes der Mischung im unkatalysierten Fall anfangs bei 30°C, ab 120 min Reaktionszeit bei 50°C. Vergleichsversuch 2 zeigt die Abnahme des NCO-Gehaltes der Mischung im unkatalysierten Fall anfangs bei 30°C, ab 120 min Reaktionszeit bei 50°C wobei der Reaktionsmischung vor Reaktionsbeginn ca. 2000 ppm 2-Ethylhexansäure, bezogen auf das eingesetzte HDI-Polyisocyanat ohne Lösemittel, zugesetzt wurde. Die Vergleichsversuche 3 und 4 zeigen die Abnahme des NCO-Gehaltes der Mischung im DBTLkatalysierten Fall (20 ppm Sn auf Desmodur^{®} N 3300) ohne bzw. mit Säurezugabe unter ansonsten identischen Bedingungen wie bei den Versuchen 1 und 2.

Wie man sieht, wird die mit DBTL katalysierte Reaktion deutlich stärker durch Säurezugabe beschleunigt als die unkatalysierte. Den erfindungsgemäßen Beispielen ist zu entnehmen, dass die NCO-OH-Reaktion bei 30°C mit den erfindungsgemäßen ionischen Zinn-II-verbindungen kaum beschleunigt wird, wenn eine hinreichend geringe Katalysatorbeladung (hier: um 20 ppm Sn auf Desmodur^{®} N 3300) gewählt wird. In Abhängigkeit von Katalysatortyp und -konzentration kann allerdings mit oder ohne Temperaturerhöhung auf 50°C eine an die jeweilige Anforderung maßgeschneiderte Reaktivität erzielt werden. Weiterhin ist durch Säurezugabe, wie auch bei den Vergleichsversuchen 3 und 4 mit DBTL, eine deutliche Beschleunigung der Reaktion bei sonst gleicher Katalysatorkonzentration zu verzeichnen.

Beispiel 11 zeigt, dass die Bildung des thermolatenten Katalysators auch "in situ" erfolgen kann, indem eine Lösung des Pyridinderivates der Formel II mit R¹ = R² = OCH₃, n = 1, X = Y = C, D¹ = D² = O in der Isocyanatkomponente vorgelöst wird und die stöchiometrisch nötige Menge SnCl₂ (2 Äquivalente auf Pyridinderivat der Formel II mit R¹ = R² = OCH₃, n = 1, X = Y = C, D¹ = D² = O) im Triethylenglykolmonomethylether gelöst wird und anschließend beide (additivierten) Reaktivkomponenten vereinigt werden. Hinzu kommt, dass hierbei eine deutlich höhere Aktivität bei Temperaturerhöhung beobachtet wird, während die Thermolatenz kaum leidet, d.h. die erwünscht langsame Reaktion bei niedriger Temperatur nur unwesentlich stärker beschleunigt wird, als bei dem Versuch im Beispiel 7.

**Tabelle 1: Übersicht über die durchgeführten Versuche (Beispiele 1 bis 4: Vergleichsbeispiele, Beispiele 5 bis 11: erfindungsgemäß)**

| **Bsp. -Nr.** | **Kat** | **Kat.-konz. ¹⁾** | **NCO-Gehalt der Mischung [normiert auf Ausgangswert = 100%] nach [min]** | | | | | | | | | |
|---|---|---|---|---|---|---|---|---|---|---|---|---|
| | | | **60** | **120** | **140** | **160** | **180** | **200** | **300** | **400** | **500** | **1000** |
| 1 | ohne | 0 | 99% | 98% | 96% | 95% | 94% | 93% | 92% | 88% | 85% | 68% |
| 2 | ohne | 0²⁾ | 96% | 95% | 94% | 93% | 93% | 92% | 88% | 80% | 76% | 55% |
| 3 | DBTL | 20 | 90% | 84% | 80% | 69% | 58% | 45% | 18% | 15% | 5% | - |
| 4 | DBTL | 20²⁾ | 71% | 56% | 48% | 36% | 29% | 23% | 15% | 9% | 3% | - |
| 5 | Kat. 1 | 20 | 98% | 96% | 94% | 89% | 86% | 80% | 58% | 42% | 25% | - |
| 6 | Kat. 1 | 20²⁾ | 98% | 96% | 89% | 80% | 73% | 67% | 39% | 22% | 5% | - |
| 7 | Kat. 2 | 20 | 97% | 92% | 89% | 86% | 84% | 82% | 60% | 46% | 28% | - |
| 8 | Kat. 2 | 20²⁾ | 99% | 97% | 87% | 80% | 84% | 73% | 45% | 22% | 8% | - |
| 9 | Kat. 3 | 20 | 99% | 97% | 95% | 92% | 84% | 77% | 53% | 35% | 25% | - |
| 10 | Kat. 3 | 20²⁾ | 96% | 92% | 87% | 78% | 70% | 60% | 28% | 15% | 5% | - |
| 11 | Kat. 2 | 20³⁾ | 95% | 91% | 75% | 53% | 42% | 29% | 11% | - | - | - |

| | | | | | | | | | | | | |
|---|---|---|---|---|---|---|---|---|---|---|---|---|
| ¹⁾ Sn [ppm] auf Polyisocyanathärter; ²⁾ 2-Ethylhexansäure, ca. 2000 ppm auf Polyisocyanathärter; ³⁾ Katalysator "in situ" gebildet. | | | | | | | | | | | | |

## Patentansprüche

1. Anorganische Zinnverbindung gemäß der Formel I, 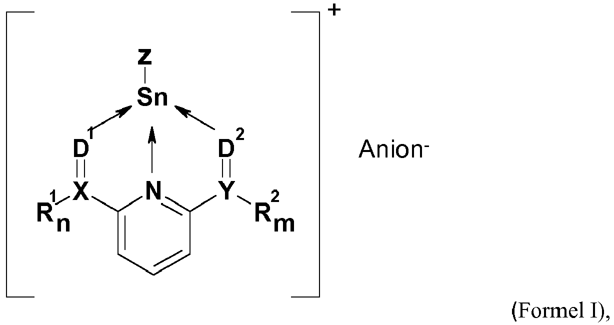 in welcher
R¹ und R² unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
n in Abhängigkeit von X für die Zahl 1 oder 2 steht,
m in Abhängigkeit von Y für die Zahl 1 oder 2 steht,
Z für Halogenid, Carboxylat, Alkoholat oder Sulfonat steht,
X und Y unabhängig voneinander für gleiche oder verschiedene Atome ausgewählt aus der Gruppe bestehend aus den Atomen C, P und S stehen,
D¹ und D² unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht und wobei R³ kein Phenylrest ist, der an 2,6-Position durch von H verschiedene organische Reste substituiert ist, und
Anion⁻ für SnZ₃⁻ oder Z⁻ steht.

2. Anorganische Zinnverbindung gemäß Anspruch 1, **dadurch gekennzeichnet, dass** R¹ und R² unabhängig voneinander für gleiche oder verschiedene Reste ausgewählt aus der Gruppe bestehend aus H, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, bevorzugt unabhängig voneinander für gleiche oder verschiedene Reste ausgewählt aus der Gruppe bestehend aus O-C₁-C₈-Alkyl, O-C₁-C₂₀-Aralkyl, O-C₆-C12-Aryl, N(C₁-C₈-Alkyl)₂, N(C₁-C₂₀-Aralkyl)₂ und N(C₆-C₁₂-Aryl)₂ stehen, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind.

3. Anorganische Zinnverbindung gemäß Anspruch 1 oder 2, **dadurch gekennzeichnet, dass** D¹ und D² unabhängig voneinander für gleiche oder verschiedene Reste ausgewählt aus der Gruppe bestehend aus O und S stehen.

4. Anorganische Zinnverbindung gemäß einem der Ansprüche 1 bis 3, **dadurch gekennzeichnet, dass** Z für Halogenid oder Sulfonat, bevorzugt für Chlorid oder Perfluoralkylsulfonat ausgewählt aus der Gruppe bestehend aus CF₃SO₃ bis C₈F₁₇SO₃ steht.

5. Verfahren zur Herstellung einer anorganischen Zinnverbindung, umfassend die Umsetzung mindestens einer Verbindung gemäß der Formel II, 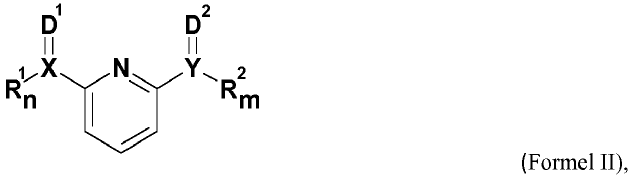 in welcher R¹, R², n, m, X, Y, D¹ und D² die in einem der Ansprüche 1 bis 3 genannte Bedeutung haben, mit mindestens einem Zinn-II-salz der Formel SnZ₂, wobei Z die in Anspruch 1 oder 4 genannte Bedeutung hat.

6. Verwendung wenigstens einer anorganischen Zinnverbindung gemäß der Formel I nach einem der Ansprüche 1 bis 4 oder wenigstens einer anorganischen Zinnverbindung gemäß der Formel III, 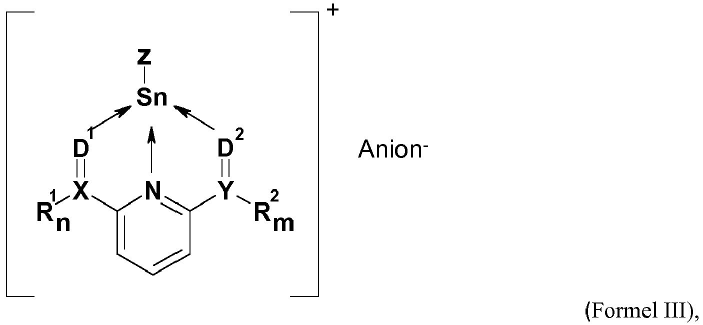 in welcher
R¹ und R² unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
n in Abhängigkeit von X für die Zahl 1 oder 2 steht,
m in Abhängigkeit von Y für die Zahl 1 oder 2 steht,
Z für Halogenid, Carboxylat, Alkoholat oder Sulfonat steht,
X und Y unabhängig voneinander für gleiche oder verschiedene Atome ausgewählt aus der Gruppe bestehend aus den Atomen C, P und S stehen,
D¹ und D² unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht, und
Anion⁻ für SnZ₃⁻ oder Z⁻ steht,
als Katalysator der Reaktion von Isocyanatgruppen mit gegenüber Isocyanatgruppen reaktiven Gruppen.

7. Zusammensetzung, enthaltend
- mindestens ein aliphatisches, cycloaliphatisches, araliphatisches und/oder aromatisches Polyisocyanat,
- mindestens eine NCO-reaktive Verbindung, und
- mindestens eine anorganische Zinnverbindung gemäß der Formel I nach einem der Ansprüche 1 bis 4 oder mindestens eine anorganische Zinnverbindung gemäß der Formel III, 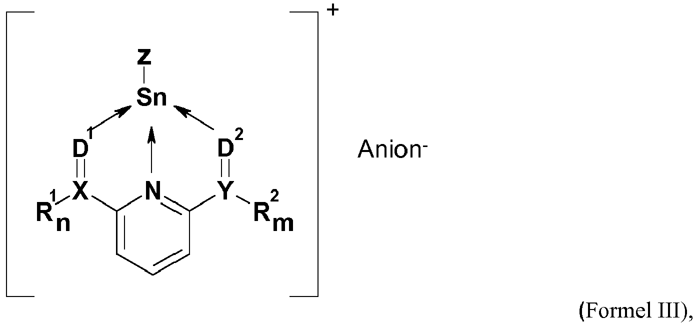 in welcher
R¹ und R² unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
n in Abhängigkeit von X für die Zahl 1 oder 2 steht,
m in Abhängigkeit von Y für die Zahl 1 oder 2 steht,
Z für Halogenid, Carboxylat, Alkoholat oder Sulfonat steht,
X und Y unabhängig voneinander für gleiche oder verschiedene Atome ausgewählt aus der Gruppe bestehend aus den Atomen C, P und S stehen,
D¹ und D² unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht, und
Anion⁻ für SnZ₃⁻ oder Z⁻ steht.

8. Zusammensetzung gemäß Anspruch 7, **dadurch gekennzeichnet, dass** sie ein Zwei-Komponenten-system ist, welches eine Komponente A) enthält, die wenigstens das mindestens eine aliphatische, cycloaliphatische, araliphatische und/oder aromatische Polyisocyanat umfasst und eine Komponente B) enthält, die wenigstens die mindestens eine NCO-reaktive Verbindung umfasst, wobei die mindestens eine anorganische Zinnverbindung gemäß der Formel I oder die mindestens eine anorganische Zinnverbindung gemäß der Formel III in der Komponente A) und/oder der Komponente B) enthalten ist.

9. Zusammensetzung gemäß Anspruch 7, **dadurch gekennzeichnet, dass** sie ein Zwei-Komponenten-system ist, das als Komponente A) wenigstens das mindestens eine aliphatische, cycloaliphatische, araliphatische und/oder aromatische Polyisocyanat umfasst und als Komponente B) wenigstens die mindestens eine NCO-reaktive Verbindung umfasst, und die Komponente A) eine der beiden für die "in situ" Katalysatorsynthese nötigen Komponenten, bevorzugt das Zinn-freie Derivat gemäß der Formel II, 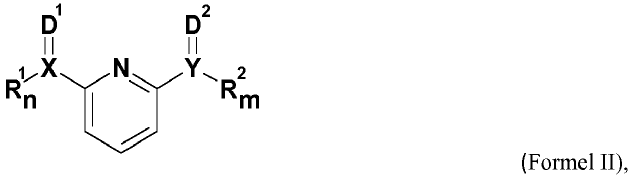 in welcher R¹, R², n, m, X, Y, D¹ und D² die in Anspruch 7 für die Formel III angegebene Bedeutung oder die in Anspruch 5 angegebene Bedeutung haben, enthält und die Komponente B) die entsprechend andere für die "in situ" Katalysatorsynthese nötige Komponente, bevorzugt das Zinn-Derivat SnZ₂, wobei Z die in Anspruch 7 für die Formel III angegebene Bedeutung oder die in Anspruch 5 angegebene Bedeutung hat, enthält.

10. Polyisocyanat-Polyadditionsprodukte, erhältlich oder erhalten aus einer Zusammensetzung gemäß einem der Ansprüche 7 bis 9 oder aus
a) mindestens einem aliphatischen, cycloaliphatischen, araliphatischen und/oder aromatischen Polyisocyanat,
b) mindestens einer NCO-reaktiven Verbindung,
c) mindestens einer anorganische Zinnverbindung gemäß der Formel I nach einem der Ansprüche 1 bis 4 oder mindestens einer anorganischen Zinnverbindung gemäß der Formel III, 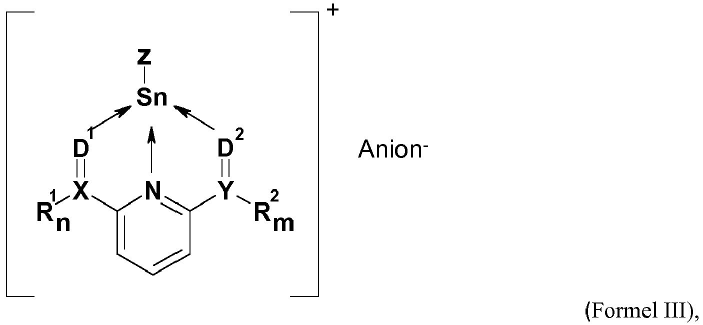 in welcher
R¹ und R² unabhängig voneinander für gleiche oder verschiedene Reste ausgewählt aus der Gruppe bestehend aus H, C₁-C₂₀-Alkyl, C₁-C₂₀-Aralkyl, C₆-C₂₀-Aryl, O-C₁-C₂₀-Alkyl, O-C₁-C₂₀-Aralkyl, O-C₆-C₂₀-Aryl, N(C₁-C₂₀-Alkyl)₂, N(C₁-C₂₀-Aralkyl)₂ und N(C₆-C₂₀-Aryl)₂, wobei die von H verschiedenen Reste jeweils unsubstituiert oder substituiert sind, und/oder durch ein oder mehrere Heteroatome ausgewählt aus der Gruppe bestehend aus Sauerstoff, Schwefel, Stickstoff und Silizium unterbrochen sind, stehen,
n in Abhängigkeit von X für die Zahl 1 oder 2 steht,
m in Abhängigkeit von Y für die Zahl 1 oder 2 steht,
Z für Halogenid, Carboxylat, Alkoholat oder Sulfonat steht,
X und Y unabhängig voneinander für gleiche oder verschiedene Atome ausgewählt aus der Gruppe bestehend aus den Atomen C, P und S stehen,
D¹ und D² unabhängig voneinander für gleiche oder verschiedene Reste ausgewählt aus der Gruppe bestehend aus O, S und NR³ stehen, wobei R³ für gleiche oder verschiedene Substituenten ausgewählt aus der Gruppe bestehend aus C₁-C₂₀-Alkyl, C₁-C₂₀-Aralkyl und C₆-C₂₀-Aryl steht, und
Anion⁻ für SnZ₃⁻ oder Z⁻ steht,
wobei die anorganische Zinnverbindung gemäß der Formel I oder gemäß der Formel III vor oder während der Mischung des Polyisocyanats a) und der NCO-reaktiven Verbindung b) gebildet werden kann,
d) gegebenenfalls weiteren von c) verschiedenen Katalysatoren und/oder Aktivatoren und
e) gegebenenfalls Füllstoffen, Pigmenten, Additiven, Verdickern, Entschäumern und/oder anderen Hilfs- und Zusatzstoffen.
